# FASCICULE DE BREVET EUROPEEN

(11) **EP 0 845 348 B1**
(45) Date de publication et mention de la délivrance du brevet: **13.02.2002**
(21) Numéro de dépôt: 97119877.5
(22) Date de dépôt: 13.11.1997
(51) Int. Cl.: B29D 30/70, B29D 30/30, B29C 70/32

(54) **Guide-fil à frein réglable, recevant des fils projetés sur une surface**
Einstellbare Führungsdrahtanordnung zur Führung von Seilen, die auf eine Fläche projektiert werden
Adjustable guidewire assembly for guiding cords being projected on a surface

(30) Priorité: 27.11.1996 FR 9614634
(43) Date de publication de la demande: 03.06.1998
(73) Titulaire: SEDEPRO, F-75015 Paris (FR)
(72) Inventeur: Debroche, Claude, 63118 Cebazat 6 (FR)
(74) Mandataire: Bauvir, Jacques

(56) Documents cités:
- US-A- 3 894 906
- US-A- 4 952 259
- US-A- 4 992 123

## Description

La présente invention concerne en particulier la fabrication des pneumatiques. Plus précisément, elle se rapporte à la fabrication d'armatures de renforcement, notamment celles que l'on trouve sous la bande de roulement de pneumatiques à ceinture, dont la carcasse est le plus souvent radiale.

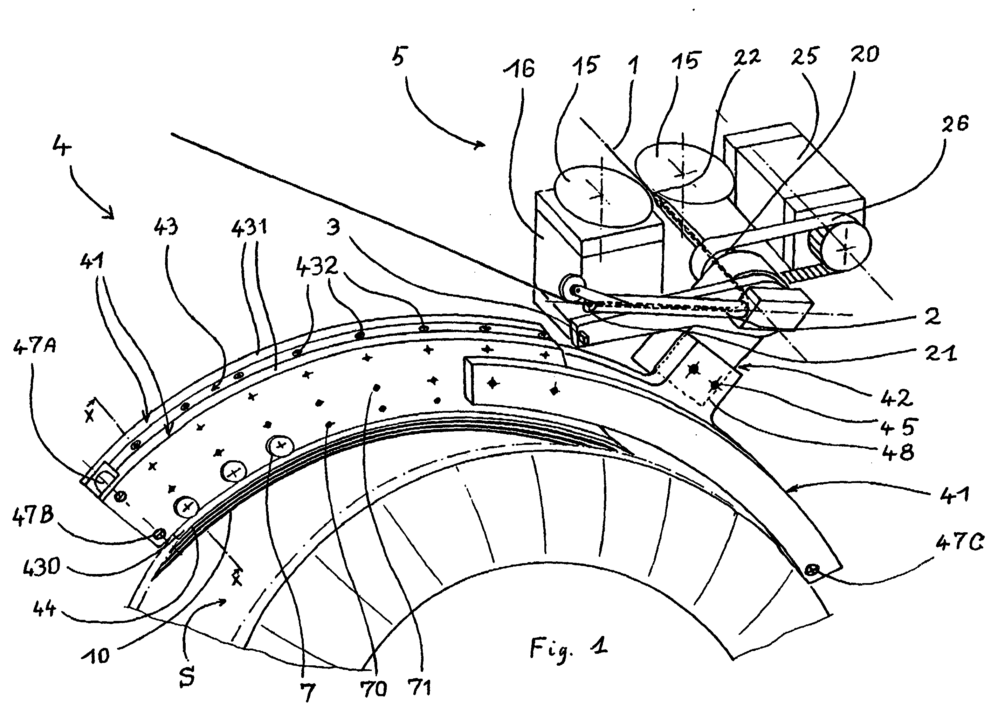

Par le brevet US 4 952 259, l'état de la technique connaît une tentative de fabriquer de tels renforcements non plus sous forme de produits semi-finis appelés "nappes", préparés à plat, que l'on incorpore par la suite lors de l'assemblage de l'article concerné, mais directement en cours de fabrication, par exemple directement dans l'ébauche de pneumatique, et à partir d'un fil continu. Cette proposition est basée sur la projection d'un fil à la manière de la lanière d'un fouet. La figure 1 de la présente demande illustre un appareil de fabrication d'un renforcement pour pneumatique utilisant ce principe. Un tel appareil utilise un fil 1, conditionné par exemple sous la forme d'une bobine d'alimentation, non représentée. L'appareil projette des tronçons 10 dudit fil sur une surface de réception S, ici appartenant audit pneumatique en cours de fabrication.

Le terme "fil" doit bien entendu être compris dans un sens tout à fait général, englobant un monofilament, un multifilament, un câble ou un retors ou un assemblage équivalent, et ceci quelle que soit la matière constituant le fil ou le traitement qu'il a subi, par exemple un traitement de surface pour favoriser sa liaison intime avec du caoutchouc, voire encore un traitement de gommage entourant ledit fil d'une couche de caoutchouc, pour permettre son adhésion directe sur le support lors de sa projection.

Ledit appareil comporte un ensemble 5 comprenant :
- des moyens d'appel de fil 1, à partir d'une source de fil non représentée, par exemple une bobine,
- un conduit rotatif 2 fixé sur un arbre 20 constituant l'axe de rotation dudit conduit, de manière telle que l'extrémité radiale extérieure 21 dudit conduit soit orientée sensiblement radialement par rapport à l'axe de rotation, ledit conduit recevant le fil 1 par son extrémité centrale 22 opposée à ladite extrémité radiale extérieure 21 en provenance desdits moyens d'appel, ledit fil sortant par ladite extrémité radiale extérieure, lesdits moyens d'appel contrôlant la vitesse linéaire d'avance du fil à l'intérieur dudit conduit rotatif,
- des moyens pour entraîner en rotation ledit conduit rotatif 2,
- des moyens pour sectionner le fil agissant sur le fil de façon à libérer un tronçon à chaque tour dudit conduit rotatif 2.

En outre, ledit appareil comprend un guide-fil, désigné en général par la référence 4, pour recevoir des tronçons 10 de fil. Pour plus de détails sur le fonctionnement d'un appareil de ce type, le lecteur est invité à consulter le brevet US 4 952 259 susmentionné. Rappelons simplement que ledit guide-fil 4 est positionné par rapport audit conduit rotatif 2 de façon à recevoir le fil, ou plus précisément des tronçons 10 prélevés au fur et à mesure sur ce fil, dans le plan de rotation dudit conduit 2. Le guide-fil 4 reçoit le tronçon 10 de fil, qui passe au travers de ce guide-fil et sort par un orifice de projection 40 positionné à proximité immédiate de la surface sur laquelle le tronçon de fil doit être déposé et maintenu par adhérence.

L'objectif de la présente invention est de simplifier la réalisation d'un tel guide-fil et de faciliter l'utilisation d'un tel appareil de pose de fils pour une large gamme d'articles fabriqués, par exemple pour une gamme de pneumatiques comprenant de nombreux types différents, impliquant des dimensions différentes de renforcements de sommet, des bombés plus ou moins accentués de la surface sur laquelle on projette les tronçons de fil, ou bien encore des types de fils différents.

Selon l'invention, le guide-fil comporte une paire de déflecteurs, délimitant au moins un dégagement intérieur allongé, placé dans ledit plan de rotation, agencés de façon à laisser entre eux une fente du côté de l'orifice de projection, dans laquelle peut passer chaque tronçon de fil, lesdits déflecteurs étant conçus pour exercer une pression l'un vers l'autre, du côté de l'orifice de projection, au moins au passage d'un tronçon de fil, tout en pouvant s'esquiver au passage du tronçon de fil. Le guide-fil comporte des moyens pour régler la pression exercée par lesdits déflecteurs sur ledit tronçon de fil.

Le guide-fil selon l'invention est plus particulièrement avantageux lorsque l'on dépose certains fils de renforcement métalliques. Dans ce cas, il est souhaitable de freiner de façon assez importante le tronçon de fil avant qu'il ne rejoigne la surface de l'ébauche de pneu en cours de fabrication. L'importance de ce freinage dépend de plusieurs paramètres comme la nature du fil, la nature du revêtement de caoutchouc dont est couverte la surface sur laquelle on projette les tronçons de fil. L'existence de moyens de réglage de la pression permet d'ajuster au mieux le freinage et permet de faciliter l'utilisation de ce type d'appareil et d'en améliorer la fiabilité.

Dans la suite, l'invention est illustrée par un mode de réalisation particulier dans lequel le guide-fil forme un sous-ensemble amovible. Le guide-fil comporte un berceau. Dans cet exemple, ledit berceau forme un rectangle fermé et allongé, formé par deux branches parallèles reliées entre elles à leurs extrémités par des entretoises, lesdits déflecteurs étant montés à l'intérieur desdites branches. Ledit berceau est pourvu d'une portée de fixation permettant la fixation amovible dudit guide-fil audit ensemble. Ladite portée est de préférence localisée, et est dans cet exemple aménagée sur l'une desdites branches, du côté opposé à l'un desdits déflecteurs.

Ce mode de réalisation, bien entendu non limitatif, permet de prérégler le guide-fil alors qu'il n'est pas monté sur la machine de fabrication d'un renforcement. Dans les ateliers de fabrication de pneus, on peut disposer d'autant de guide-fil que nécessaire. Lorsqu'il faut assurer la fabrication de plusieurs gammes de pneus différents, imposant en pratique des réglages différents du guide-fil, on utilise plusieurs guide-fil préréglés en atelier. On dispose de tout le temps nécessaire régler correctement les déflecteurs. Puis on peut monter ce sous-ensemble sur la machine très rapidement au moment voulu, afin de ne pas obérer la productivité des machines.

Tous les détails de réalisation de l'invention sont expliqués dans la suite, avec l'aide des figures jointes.

La figure 1 est une perspective montrant le guide-fil selon l'invention.

La figure 2 est une autre vue, partielle, du guide-fil.

Les figures 3 et 4 montrent plus en détail des variantes de réalisation d'un réglage prévu par l'invention, avec demi vue et demi coupe partielle selon XX à la figure 1.

A la figure 1, on voit l'ensemble 5 dont la fonction est de délivrer des tronçons de fils pourvus d'une quantité de mouvement leur permettant de rejoindre la surface sur laquelle on souhaite les déposer. Le fil 1 est entraîné au moyen de galets 15 entre lesquels il est pincé. L'un de ces galets est entraîné en rotation par le moteur 16. Un moteur 25 entraîne l'arbre 20 par une courroie 26. Un couteau 3 stationnaire, disposé dans la trajectoire du fil 1 juste en aval de l'extrémité radiale extérieure 21, sectionne le fil à chaque tour du conduit rotatif 2.

Dans le mode de réalisation de l'invention, le guide-fil 4 forme un sous-ensemble compact, qui prend appui sur la carcasse de l'appareil de pose des fils proprement dit. Il lui est fixé d'une façon robuste, mais amovible et donc facilement détachable. De ce fait, il est très simple de changer de guide-fil, à la demande. On peut réaliser autant de guide-fil que nécessaire, par exemple autant que de courbure différente présentée par la surface sur laquelle on fouette les tronçons 10 de fil. Il n'est dès lors plus utile de prévoir un mécanisme d'ajustement de la courbure. S'il est nécessaire d'utiliser une configuration différente pour le guide-fil, cela se fait très simplement en changeant le guide-fil lui-même. On peut stocker plusieurs guide-fil préconfigurés, ce qui fait que ce changement peut être exécuté très rapidement.

Il est important de noter que, par rapport à tous les modes de réalisation décrits dans le brevet US 4 952 259 déjà mentionné, les organes de l'ensemble 5 sont disposés de façon à ce que toutes les pièces mécaniques de l'ensemble 5 soient regroupées d'un seul côté du conduit rotatif 2. Autrement dit, la commande de la rotation dudit conduit et la commande d'entraînement du fil 1 par galets sont situés du même côté. Cela est rendu possible en déportant le moteur 25 par rapport à l'arbre 20. Cela rend l'édifice mécanique très compact et facilite la conception d'une portée de fixation 42 unique, de dimensions faibles par rapport à l'encombrement du guide-fil 4.

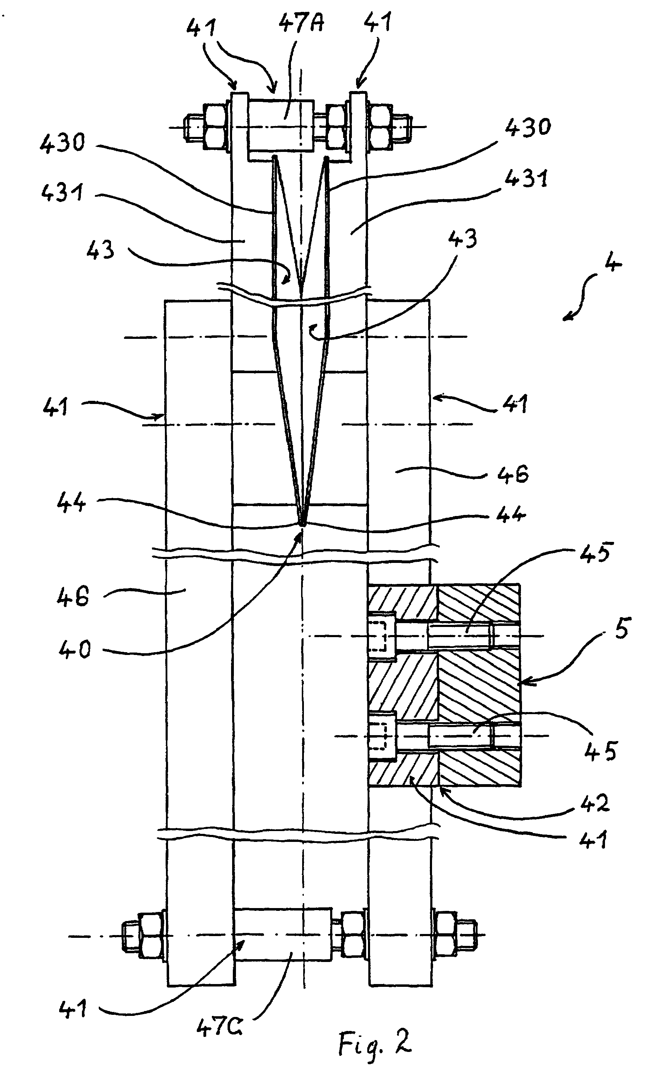

On voit que le guide-fil 4 est monté en porte-à-faux sur la carcasse de l'ensemble 5 contenant le conduit rotatif 2. La portée de fixation 42 est située à l'interface entre le guide-fil 4 et l'ensemble 5 (voir figure 2). Ladite portée est continue et entièrement circonscrite par une ligne fermée 48 (figure 1). Elle est conçue pour permettre la fixation amovible dudit guide-fil 4 audit ensemble 5. On peut pour cela utiliser un système d'attache rapide ou même très simplement des vis 45. Le guide-fil jouant un rôle de guidage et freinage pour garantir une grande précision dans la dépose des tronçons 10 de fil, il est important que la portée de fixation 42 et les moyens de fixation choisis, ici des vis 45, permettent une fixation suffisamment robuste.

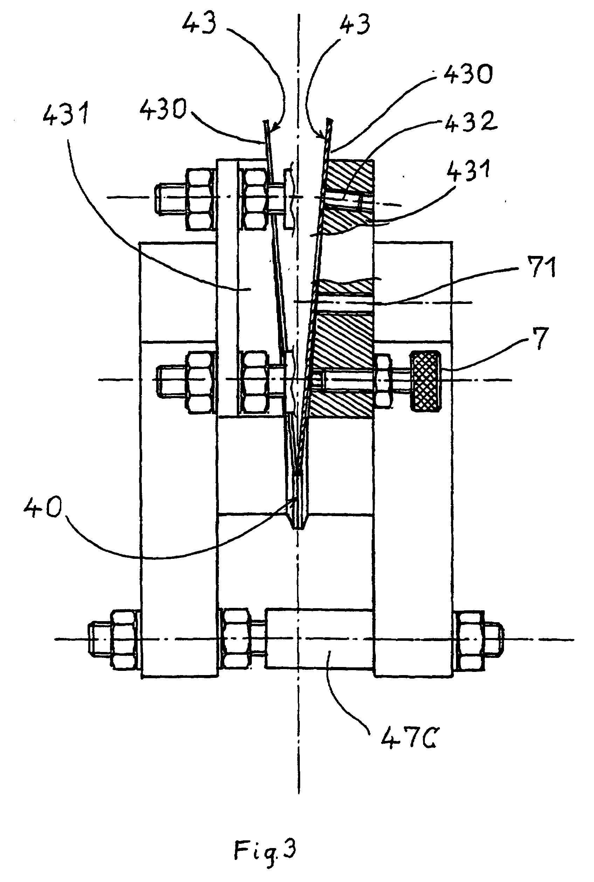

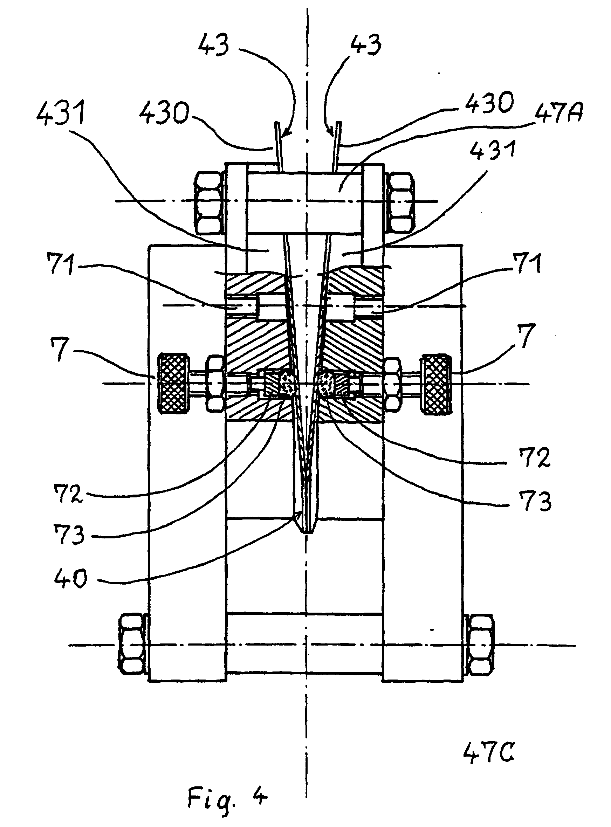

Le guide-fil 4 comporte donc un berceau, désigné en général par la référence 41 pour viser toutes les pièces qui le constitue. Ce berceau 41 supporte une paire de déflecteurs 43 délimitant un dégagement intérieur allongé, contenant ledit plan de rotation. Les déflecteurs sont constitués chacun par une tôle 430, fixée sur un support plus massif 431, dans la partie de ladite tôle éloignée de l'orifice de projection, par des fixations supérieures 432 (voir figures 1 et 3). Ces fixations supérieures 432 sont conçues pour maintenir la tôle 430 en vis à vis de son support 431. Le support 431 fait partie du berceau ou bien rapporté à l'intérieur de celui-ci. Comme on le voit bien aux figures 3 et 4, la tôle 430 déborde radialement vers l'orifice de projection 40 au delà du support 431. Cela permet de garantir une certaine déformation élastique possible des déflecteurs dans le sens transversal même si les tôles sont plaquées sur le support du côté de l'orifice de projection.

Des vis de pression 7 sont disposées entre tôle 430 et support 431 pour appuyer sur au moins une (figure 3) desdites tôles dans la région de la tôle plus proche de l'orifice de projection que les fixations supérieures 432. De préférence, on installe de telles vis de pression pour appuyer sur les deux tôles (figure 4). Ces vis 7 permettent d'écarter la tôle 430 de son support 431. Dans un mode de réalisation particulier, on écarte les tôles de leur support jusqu'à ce que les deux tôles 430 viennent en contact l'une sur l'autre, au moins ponctuellement, et ceci dans la fente de passage des tronçons de fil. Les tôles sont disposées de façon à assurer ce contact au moins du côté opposé au conduit rotatif 2, c'est à dire sur la plage du guide-fil la plus éloignée de l'ensemble 5. On notera que le support 431 est pourvu de plusieurs trous filetés 70 pouvant servir de points d'ancrage possibles pour introduire de telles vis de pression au même niveau que celles représentées aux figures. On notera aussi la présence d'autres trous filetés 71 pouvant servir de points d'ancrage possibles pour introduire de telles vis de pression à un niveau intermédiaire entre les vis de pression représentées et les fixations supérieures 432. Il est possible de n'utiliser que quelques uns de ces trous filetés 70 ou 71, choisis spécifiquement selon le résultat d'essais expérimentaux menés pour chacun des types de fils à projeter. Rappelons que ces vis de pression 7 sont implantées de façon à, au niveau de la bordure inférieure 44, autoriser l'écartement relatif desdites tôles pour laisser passer les tronçons de fil, tout en procurant un rappel élastique vers la position initiale. Le réglage de ces vis de pression 7 peut être effectué en atelier, indépendamment de la machine, en respectant des consignes de précontrainte préétablies.

La figure 4 montre également une autre variante d'exécution pour exercer une certaine pression de rapprochement relatif des tôles 430. Les vis 70 agissent sur la tôle 430 par l'intermédiaire d'un arc de cerceau 72 (éventuellement réalisé en plusieurs arcs contigus) et d'un coussin 73 en caoutchouc ou en tout autre matériau souple.

Dans le mode de réalisation illustrant l'invention, le berceau 41 est formé par deux barres cintrés 46, par chacun des supports massifs 431, et par trois entretoises 47A, 47B et 47C. Vu dans le plan de projection des tronçons, le berceau 41 a sensiblement l'allure d'un rectangle incurvé, fermé et allongé, formé par deux branches sensiblement parallèles, reliées entre elles par leurs extrémités. Le caractère fermé du berceau permet de concilier rigidité, légèreté, et ceci allié à une fixation localisée permet de le rendre facilement amovible. Notons que le berceau peut aussi prendre son caractère fermé au moment et par les moyens de la fixation à l'ensemble 5. Les déflecteurs sont montés à l'intérieur desdites branches, et la portée est aménagée sur l'une desdites branches, du côté opposé à l'un desdits déflecteurs. Les déflecteurs sont conformés de façon à ce que l'écartement entre chaque déflecteur aille en se rétrécissant au fur et à mesure que l'on se rapproche de l'orifice de projection (voir figure 2).

Le rectangle que forme le berceau 41 laisse un dégagement suffisamment long pour que les tronçons 10 puissent passer au travers. L'entretoise 47C ne gêne ni le passage du tronçon 10 qui vient d'être libéré par le couteau 3, ni le passage de l'extrémité du fil qui sort de l'extrémité radiale extérieure 21 du conduit rotatif 2. On se souvient que l'entraînement du fil provoque une avance continue de celui-ci, et que juste après sectionnement par le couteau 3, l'extrémité du fil (on ne désigne pas ici le tronçon) forme une trajectoire en spirale dans le plan de rotation du conduit 2. L'entretoise 47C doit donc se situer radialement au delà de cette trajectoire pour ne pas gêner le mouvement du fil.

En outre, afin de procurer un autre moyen de régler la pression exercée par les déflecteurs l'un vers l'autre, l'une au moins desdites entretoises (de préférence l'entretoise 47B) est de longueur variable afin de régler la distance séparant lesdits déflecteurs. De préférence, toutes les entretoises 47A, 47B et 47C sont réglables : elles comportent une tige filetée immobilisée définitivement sur un des supports 431, et maintenant l'autre support 431 par le biais d'écrous et contre-écrous. Ce type de réglage peut être utilisé simultanément au réglage décrit ci-dessus, ou bien chacun des réglages peut être utilisé seul. Dans ce dernier cas (seulement entretoise réglable), on peut substituer aux vis de réglage telles que décrites ici des moyens de fixation non réglables en soi, bloquant la position de chaque tôle par rapport à son support par l'intermédiaire de cales d'épaisseur adaptée.

Les déflecteurs sont agencés de façon à laisser entre eux une fente au travers de laquelle chaque tronçon de fil peut passer en force. Chaque déflecteur comporte, du côté de l'orifice de projection, une bordure 44 qui est incurvée de façon à approcher la forme de la surface de réception S sur laquelle on projette les tronçons 10 de fil. Cette bordure 44 correspond au bord inférieur de la tôle 430 correspondante. Dans cet exemple, la bordure épouse le bombé du sommet d'un pneu vu en section plane comprenant un rayon et formant un angle typique des fils de renforcement de sommet. Plus généralement, la trace que fait la projection orthogonale de chacune desdites bordures dans le plan de rotation du conduit rotatif 2 est non linéaire pour épouser plus ou moins les courbures de la surface de réception.

Les dimensions de la portée de fixation 42 sont nettement plus faibles que la longueur des déflecteurs mesurée le long de ladite bordure 44, c'est à dire le long de la fente au travers de laquelle passent les tronçons 10.

Le jeu subsistant entre la bordure 44 et la surface de projection S est sensiblement constant (voir figure 1). Il correspond par exemple à deux ou trois fois l'épaisseur d'un tronçon 10 de fil. Grâce au fait que la tôle 430 permet d'assurer un guidage continu du tronçon 10 tout le long de sa longueur, on obtient une dépose précise du tronçon à l'emplacement souhaité. En pratique, ce ne sont que les tôles 430 qui doivent être découpées au profil approché de la surface S. Par ailleurs, le frottement des tronçons 10 sur ces tôles provoque à la longue une certaine usure de celles-ci. Pour toutes ces raisons, il est très pratique de pouvoir les remplacer. Mais, afin de ne pas obérer la productivité des machines, l'invention permet de procéder au remplacement des tôles sur un guide-fil non monté sur l'ensemble 5. On intervient ainsi sur un sous-ensemble (guide-fil 4) en atelier, en disposant de tout le temps nécessaire pour monter et régler correctement ces tôles 430, puis on peut monter ce sous-ensemble sur la machine au moment voulu.

Le berceau 41 constitue ainsi un support mécanique sur lequel sont regroupés tous les éléments du guide-fil. Par ailleurs, on sait que le conduit rotatif et les organes de motorisation du fil forment un ensemble 5 qu'il faut approcher de la surface sur laquelle on souhaite fabriquer un renforcement de sommet, et positionner correctement, pour que les fils soient projetés exactement à l'endroit voulu. Il en est de même pour le guide-fil. Le berceau 41 étant rendu solidaire dudit ensemble 5, on comprend que le guide-fil 4 suit exactement les mouvements qu'un mécanisme non représenté peut conférer à l'ensemble 5 pour lui permettre de s'approcher du support sur lequel on fabrique un pneu.

## Revendications

1. Appareil de fabrication d'un renforcement à partir d'un fil déposé directement à sa place finale en projetant des tronçons dudit fil sur une surface de réception (S), ledit appareil comportant un ensemble (5) comprenant :
• des moyens d'appel de fil (1),
• un conduit rotatif (2) fixé sur un arbre (20) constituant l'axe de rotation dudit conduit, de manière telle que l'extrémité radiale extérieure (21) dudit conduit soit orientée sensiblement radialement par rapport à l'axe de rotation, ledit conduit recevant le fil (1) par son extrémité centrale (22) opposée à ladite extrémité radiale extérieure (21) en provenance desdits moyens d'appel, ledit fil sortant par ladite extrémité radiale extérieure, lesdits moyens d'appel contrôlant la vitesse linéaire d'avance du fil à l'intérieur dudit conduit rotatif,
• des moyens pour entraîner en rotation ledit conduit rotatif (2),
• des moyens pour sectionner le fil agissant sur le fil de façon à libérer un tronçon (10) à chaque tour dudit conduit rotatif (2),
• un guide-fil pour recevoir des tronçons de fil, ledit guide-fil étant positionné par rapport audit conduit rotatif de façon à recevoir le fil dans le plan de rotation dudit conduit, ledit guide-fil ayant un orifice de projection hors duquel le fil peut sortir, dans lequel le guide-fil comporte une paire de déflecteurs, délimitant au moins un dégagement intérieur allongé, placé dans ledit plan de rotation, agencés de façon à laisser entre eux une fente du côté de l'orifice de projection,
**caractérisé en ce que** le guide-fil comportant des moyens pour régler la pression exercée par lesdits déflecteurs sur le tronçon de fil au passage de celui-ci, lesdits déflecteurs pouvant être fléchis au passage d'un tronçon de fil.

2. Appareil selon la revendication 1, conformé pour fabriquer in situ un renforcement pour pneumatique pendant sa fabrication, dans lequel chaque déflecteur comportant du côté de l'orifice de projection (40) une bordure (44) qui est incurvée de façon à approcher la forme de ladite surface de réception.

3. Appareil selon la revendication 1 ou 2, dans lequel le guide-fil comporte un berceau (41) formant un rectangle fermé et allongé, formé par deux branches parallèles reliées entre elles à leurs extrémités par des entretoises, lesdits déflecteurs étant montés à l'intérieur desdites branches, l'une au moins desdites entretoises étant de longueur variable afin de régler la distance séparant lesdits déflecteurs.

4. Appareil selon l'une des revendications 1 à 3, dans lequel les déflecteurs sont fixés sur un support (431) dans la partie du déflecteur la plus éloignée de l'orifice de projection.

5. Appareil selon l'une des revendications 1 à 4, dans lequel les déflecteurs sont constitués essentiellement chacun par une tôle (430).

6. Appareil selon la revendication 5, dans lequel des vis de pression (7) sont disposées entre tôle et support pour appuyer sur au moins une desdites tôles dans la région de la tôle proche de l'orifice de projection.

7. Appareil selon la revendication 6, dans lequel lesdites vis de pression (7) sont disposées au moins du côté des déflecteurs opposé au conduit rotatif (2).

8. Appareil selon l'une des revendications 1 à 7, dans lequel l'écartement entre chaque déflecteur va en se rétrécissant au fur et à mesure que l'on se rapproche de l'orifice de projection.

9. Appareil selon la revendication 3, dans lequel ledit berceau (41) est pourvu d'une portée (42) de fixation permettant la fixation amovible dudit guide-fil audit ensemble, la portée étant aménagée sur l'une desdites branches, du côté opposé à l'un desdits déflecteurs.

10. Appareil selon la revendication 9, dans lequel ladite portée de fixation est de dimensions nettement plus faibles que la longueur des déflecteurs mesurée le long de la dite fente.

11. Appareil selon la revendication 9, dans lequel ladite portée de fixation est continue et entièrement circonscrite par une ligne fermée.

12. Appareil selon la revendication 2, dans lequel la trace que fait la projection orthogonale de chacune desdites bordures (44) dans le plan de rotation est non linéaire.

13. Appareil selon l'une des revendications 1 à 12, dans lequel lesdits déflecteurs sont en contact l'un sur l'autre au moins ponctuellement, du côté de l'orifice de projection.

## Patentansprüche

1. Gerät zur Herstellung einer Verstärkung aus einem Draht, der unmittelbar auf seine endgültige Stelle aufgetragen wird, indem man Stücke des genannten Drahtes auf eine Aufnahmefläche (S) schleudert, wobei das genannte Gerät eine Baugruppe (5) umfaßt, die die folgenden Merkmale aufweist:
• Mittel zur Zufuhr von Draht (1),
• ein drehbarer Kanal (2), der auf einer Welle (20) befestigt ist, die die Drehachse des genannten Kanals bildet, und zwar derart, daß das radial äußere Ende (21) des genannten Kanals im wesentlichen radial in Bezug auf die Drehachse ausgerichtet ist, wobei der genannte Kanal den Draht (1) durch sein mittiges Ende (22) aufnimmt, das dem genannten, radialen, äußeren Ende (21) entgegengesetzt ist, von den genannten Zuführmitteln ausgehend, so daß der genannte Draht durch das genannte, radiale, äußere Ende austritt und die genannten Zuführmittel die lineare Vorschubgeschwindigkeit des Drahtes im Inneren des genannten, drehbaren Kanals steuern,
• Mittel, um den genannten, drehbaren Kanal (2) in Drehung zu versetzen,
• Mittel, um den Draht abzuschneiden, die auf den Draht derart einwirken, daß sie ein Stück (10) bei jeder Umdrehung des genannten, drehbaren Kanals (2) freisetzen, und
• eine Drahtführung zur Aufnahme der Drahtstücke, wobei die genannte Drahtführung in Bezug auf den genannten, drehbaren Kanal derart angeordnet ist, daß der Draht in der Rotationsebene des genannten Kanals aufgenommen wird, und wobei die genannte Drahtführung eine Aufschleuderöffnung aufweist, aus der der Draht austreten kann, worin die Drahtführung ein Paar Abweiser aufweist, die mindestens einen inneren, länglichen Korridor begrenzen, der in der Rotationsebene angeordnet ist, und derart angeordnet sind, daß sie zwischeneinander einen einen Schlitz auf der Seite der Aufschleuderöffnung belassen,
**dadurch gekennzeichnet, daß** die Drahtführung Mittel zum Einstellen des Andrucks aufweisen, der von den genannten Abweisern auf das Drahtstück bei dessen Durchgang ausgeübt wird, und daß die genannten Abweiser beim Durchgang eines Drahtstücks zum Nachgeben gebracht werden können.

2. Gerät nach Anspruch 1, das so ausgebildet ist, daß an Ort und Stelle eine Verstärkung eines Luftreifens während dessen Herstellung hergestellt werden kann, worin jeder Abweiser auf der Seite der Aufschleuderöffnung (40) eine Umrandung (44) aufweist, die derart gekrümmt ist, daß eine Annäherung an die Form der genannten Aufnahmefläche erfolgt.

3. Gerät nach Anspruch 1 oder 2, worin die Drahtführung einen Schlitten (41) aufweist, der ein geschlossenes und längliches Rechteck bildet, das durch zwei parallele, an ihren Enden miteinander durch Querstreben verbundene Schenkel gebildet ist, wobei die genannten Abweiser im Inneren der genannten Schenkel angebracht sind und mindestens eine der Querstreben eine variable Länge hat, um den Abstand einzustellen, der die genannten Abweiser trennt.

4. Gerät nach einem der Ansprüche 1 bis 3, worin die Abweiser auf einem Träger (431) in dem von der Ausschleuderöffnung am weitesten entfernten Teil befestigt sind.

5. Gerät nach einem der Ansprüche 1 bis 4, worin die Abweiser im wesentlichen je aus einem Blech (430) gebildet sind.

6. Gerät nach Anspruch 5, worin Andruckschrauben (7) zwischen Blech und Träger angeordnet sind, um mindestens eines der Bleche in dem Bereich des Bleches nahe der Ausschleuderöffnung abzustützen.

7. Gerät nach Anspruch 6, worin die genannten Andruckschrauben (7) mindestens auf der Seite der Abweiser angeordnet sind, die vom drehbaren Kanal (2) abgewand ist.

8. Gerät nach einem der Ansprüche 1 bis 7, worin sich der Abstand zwischen jedem Abweiser sich in dem Maße verengt, in dem man sich der Aufschleuderöffnung annähert.

9. Gerät nach Anspruch 3, worin der genannte Schlitten (41) mit einem Befestigungsbereich (42) versehen ist, der die lösbare Befestigung der genannten Drahtführung an der genannten Baugruppe gestattet, wobei der Bereich auf einem der genannten Schenkel auf der Seite angeordnet ist, die von einem der genannten Abweiser entfernt ist.

10. Gerät nach Anspruch 9, worin der genannte Befestigungsbereich Abmessungen aufweist, die deutlich geringer sind als die Längen der Abweiser, längs des genannten Schlitzes gemessen.

11. Gerät nach Anspruch 9, worin der genannte Befestigungsbereich durchgehend und von einer geschlossenen Linie völlig umschlossen ist.

12. Gerät nach Anspruch 2, worin die Spur, die die orthogonale Projektion einer jeder der Umrandungen (44) in der Rotationsebene bildet, nicht-geradlinig ist.

13. Gerät nach einem der Ansprüche 1 bis 12, worin die genannten Abweiser miteinander auf der Seite der Ausschleuderöffnung mindestens in Punktberührung stehen.

## Claims

1. An apparatus for manufacturing a reinforcement from a thread deposited directly at its final location by projecting lengths of said thread onto a receiving surface (S), said apparatus consisting of an assembly (5) comprising:
• means for advancing the thread (1),
• a rotary conduit (2) fastened on a shaft (20) constituting the axis of rotation of said conduit, in such a manner that the outer radial end (21) of said conduit is oriented substantially radially with respect to the axis of rotation, said conduit receiving the thread (1) by at its central end (22) opposite said outer radial end (21) coming from said advancing means, said thread emerging through said outer radial end, said advancing means controlling the linear speed of advance of the thread within said rotary conduit,
• means for driving said rotary conduit (2) in rotation,
• means for cutting the thread which act on the thread in such a manner as to free one length (10) upon each revolution of said rotary conduit (2),
• a thread guide for receiving lengths of thread, said thread guide being positioned with respect to said rotary conduit in such a manner as to receive the thread in the plane of rotation of said conduit, said thread guide having a projection orifice from which the thread can emerge, in which the thread guide comprises a pair of deflectors defining at least one elongated inner passage, located in said plane of rotation, said deflectors being arranged in such a manner as to leave between them a slot on the projection-orifice side,
**characterised in that** the thread guide comprising means for adjusting the pressure exerted by said deflectors on the length of thread upon the passage there, said deflectors being able to be bent as a length of thread passes.

2. An apparatus according to Claim 1, shaped for the production *in situ* of a tyre reinforcement during its manufacture, in which each deflector comprises on the projection-orifice (40) side an edge (44) which is curved in such as manner as to approach the shape of said receiving surface.

3. An apparatus according to Claim 1 or 2, in which the thread guide comprises a cradle (41) forming a closed, elongated rectangle formed by two parallel branches connected together at their ends by spacers, said deflectors being mounted within said branches, at least one of said spacers being of variable length so as to adjust the distance between said deflectors.

4. An apparatus according to any of Claims 1 to 3, in which the deflectors are fastened on a support (431) in that part of the deflector farthest from the projection orifice.

5. An apparatus according to any of Claims 1 to 4, in which the deflectors are each essentially formed of a metal sheet (430).

6. An apparatus according to Claim 5, in which pressure screws (7) are arranged between the metal sheet and the support in order to rest against at least one of said sheets in the region of the sheet close to the projection orifice.

7. An apparatus according to Claim 6, in which said pressure screws (7) are arranged at least on the side of the deflectors opposite the rotary conduit (2).

8. An apparatus according to any of Claims 1 to 7, in which the distance between each deflector decreases upon approaching the projection orifice.

9. An apparatus according to Claim 3, in which said cradle (41) is provided with a fastening surface (42) which permits the removable fastening of said thread guide to said assembly, the surface being arranged on one of said branches, on the side opposite one of said deflectors.

10. An apparatus according to Claim 9, in which said fastening surface is of substantially smaller dimensions than the length of the deflectors measured along said slit.

11. An apparatus according to Claim 9, in which said fastening surface is continuous and entirely circumscribed by a closed line.

12. An apparatus according to Claim 2, in which the trace which the perpendicular projection of each of said edges (44) forms in the plane of rotation is non-linear.

13. An apparatus according to any of Claims 1 to 12, in which said deflectors are in contact at least at points, on the projection-orifice side.
